# EUROPEAN PATENT APPLICATION

(11) **EP 4 653 606 A1**
(43) Date of publication of application: **26.11.2025**
(21) Application number: 23917724.9
(22) Date of filing: 18.12.2023
(51) Int. Cl.: D06M 11/38, D06B 7/00, D06M 15/05, D06M 101/06

(54) **METHOD FOR PRODUCING REINFORCED REGENERATED CELLULOSE FIBERS**

(30) Priority: 19.01.2023 JP 2023006435
(71) Applicant: Tohoku Seiren Co., Ltd., Yonezawa-shi, Yamagata 992-0003 (JP); Nippon Paper Industries Co., Ltd., Tokyo 114-0002 (JP)
(72) Inventor: SHIBASAKI, Hideyuki, Yonezawa-shi, Yamagata 992-0003 (JP); TUTIYA, Takuya, Yonezawa-shi, Yamagata 992-0003 (JP); AITA, Hidemi, Yonezawa-shi, Yamagata 992-0003 (JP); KONNO, Haruo, Tokyo 114-0002 (JP); KAWANO, Daiki, Tokyo 114-0002 (JP)
(74) Representative: Kuhnen & Wacker Patent- und Rechtsanwaltsbüro PartG mbB
(86) International application number: PCT/JP2023/045191
(87) International publication number: WO 2024/154513

(57) **Abstract**

Provided is a method for producing reinforced regenerated cellulose fibers, the method being capable of obtaining woven/knitted fabric which is prevented from shrinking during, for example, washing with water, and which is excellent in resistance to fibrillation, has high burst strength, and is further excellent in wear resistance in a wet state.

The method for producing reinforced regenerated cellulose fibers according to the present invention involves step A: a step for processing regenerated cellulose fibers with a caustic, and step B: a step for adsorbing fine cellulose fibers to the regenerated cellulose fibers.

## Description

### Technical Field

The present invention relates to a method for producing reinforced regenerated cellulose fibers.

### Background Art

Regenerated cellulose fibers such as rayon, polynosic, cupra, and lyocell have unique drape characteristics, and texture, gloss, and slipperiness peculiar to cellulose filaments, and thus are used in a wide range of applications such as curtains, hand-made yarns, clothes, bags, and footwear in addition to women's garment fabrics in general, stoles, and linings for men's and women's clothing. In addition, regenerated cellulose fibers are widely used in underwear applications by utilizing heat retention properties and hygroscopicity exhibited by the regenerated cellulose fibers, and in recent years, applications as functional underwear and the like by utilizing a hygroscopic heat generation effect generated when moisture is adsorbed to a fiber surface have been expanded.

On the other hand, it is known that the regenerated cellulose fibers have a characteristic that due to high hygroscopicity, the regenerated cellulose fibers absorb water and swell by being immersed in water by washing with water or the like, and the fiber length shrinks during subsequent drying. For this reason, it is generally difficult to wash woven fabrics or knitted fabrics using regenerated cellulose fibers with water, and it may be necessary to wash the woven fabrics or the knitted fabrics by dry cleaning.

It is considered that the above-described swellability exhibited by the regenerated cellulose fibers and the shrinkage phenomenon of the fiber length associated with the swellability are derived from the structure of the fibers due to the process of producing the regenerated cellulose fibers from cellulose raw materials. That is, in the production of regenerated cellulose fibers, it is known that since a natural cellulose raw material dissolved in carbon disulfide, a copper ammonia solution, N-methylmorpholine-N-oxide, or the like is spun or the like, the crystallinity of the natural cellulose decreases in the process. For this reason, it is considered that in the regenerated cellulose fibers, moisture easily permeates between cellulose molecules constituting the regenerated cellulose fibers. Therefore, the regenerated cellulose fibers exhibit swellability, and when swollen, cellulose molecules are rearranged in the fibers, and thus shrinkage occurs after drying.

In order to solve the above problems, various improvement measures have been conventionally proposed. For example, Patent Literature 1 describes a method in which a long-chain hydrocarbon-based compound is attached to a surface of regenerated cellulose fiber or the like to suppress damage to a woven fabric caused by washing or the like. Further, Patent Literature 2 describes a method in which a surface of regenerated cellulose fiber or the like is coated with amino-modified silicone to enable washing with water. On the other hand, Patent Literature 3 describes a method in which a predetermined crosslinking agent that reacts with hydroxyl groups in cellulose molecules is applied to regenerated cellulose fibers to form crosslinked structures between cellulose molecules and in the molecules, thereby suppressing rearrangement of cellulose molecules in the fibers and suppressing shrinkage due to washing with water or the like.

In addition, depending on the type of regenerated cellulose fibers, the molecules may be highly oriented in the fiber longitudinal direction, and such fibers have a problem that the fibers are easily split in the axial direction and fibrillated, and particularly easily fibrillated in a wet state.

In order to solve the problem of fibrillation, for example, Patent Literature 4 describes that a crosslinking treatment is performed on regenerated cellulose fibers using a specific compound and a glyoxal resin.

### Citation List

### Patent Literature

Patent Literature 1: JP 2011-6808 A
Patent Literature 2: JP 2012-1830 A
Patent Literature 3: JP 2005-113333 A
Patent Literature 4: JP 2015-74861 A

### Summary of Invention

### Technical Problem

There has been a demand for effective measures against both the problems of the regenerated cellulose fibers, that is, shrinkage after washing with water, and fibrillation.

Therefore, an object of the present invention is to provide a method for producing reinforced regenerated cellulose fibers capable of obtaining woven or knitted fabrics in which shrinkage during washing with water or the like is suppressed, which exhibit excellent anti-fibrillation properties, have high bursting strength, and further have excellent abrasion resistance in the wet state.

### Solution to Problem

As a result of intensive studies to achieve such an object, the present inventors have found that it is extremely effective to adsorb fine cellulose fibers after subjecting regenerated cellulose fibers to a specific treatment process, and have completed the present invention.

The present invention provides the following.
(1) A method for producing reinforced regenerated cellulose fibers, comprising steps below:
   Step A: a step of treating regenerated cellulose fibers with caustic; and
   Step B: a step of adsorbing fine cellulose fibers to regenerated cellulose fibers.
(2) The method for producing reinforced regenerated cellulose fibers according to (1), in which the Step B is performed after the Step A.
(3) The method for producing reinforced regenerated cellulose fibers according to (1) or (2), in which the fine cellulose fibers are oxidized fine cellulose fibers.
(4) The method for producing reinforced regenerated cellulose fibers according to (1) or (2), in which the regenerated cellulose fibers are lyocell.

### Advantageous Effects of Invention

According to the present invention, it is possible to provide a method for producing reinforced regenerated cellulose fibers capable of obtaining woven or knitted fabrics in which shrinkage during washing with water or the like is suppressed, which exhibit excellent anti-fibrillation properties, have high bursting strength, and further have excellent abrasion resistance in the wet state.

### Brief Description of Drawings

Fig. 1 shows observation results of a fabric surface after a rubbing fastness test (wet method) (JIS L0849) of a knitted fabric obtained in Example 1.
Fig. 2 shows observation results of a fabric surface after a rubbing fastness test (wet method) (JIS L0849) of a knitted fabric obtained in Comparative Example 1.

### Description of Embodiments

Hereinafter, the present invention will be described in detail with reference to the drawings. In the present invention, "to" includes an end value. That is, "X to Y" includes values X and Y at both ends thereof.

### (Method for Producing Reinforced Regenerated Cellulose Fibers)

The present invention is a method for producing reinforced regenerated cellulose fibers, the method including: Step A of treating regenerated cellulose fibers with caustic; and Step B of adsorbing fine cellulose fibers onto regenerated cellulose fibers. The order of Step A and Step B is not limited, but it is preferable to perform Step B after performing Step A.

### (Regenerated Cellulose Fiber)

The regenerated cellulose in the present invention is cellulose and a cellulose derivative exhibiting higher hygroscopicity than natural cellulose, and includes hydrated cellulose (cellulose II) obtained by dissolving natural cellulose (cellulose I) in a predetermined solvent such as carbon disulfide, a copper ammonia solution, or N-methylmorpholine-N-oxide and then reprecipitating, and a cellulose derivative which has undergone a certain chemical modification in the process. In addition, even those that do not dissolve natural cellulose include those that are hydrated cellulose by alkali treatment or the like.

Examples of the regenerated cellulose include rayon, polynosic, cupra, lyocell, fortizan, and mercerized cotton, and it is preferable to use lyocell from the viewpoint of more easily exhibiting the effect of the present invention.

Lyocell is a generic term for fibers obtained by dissolving a natural cellulose raw material in an organic solvent, preferably N-methylmorpholine-N-oxide (NMO), and performing wet spinning. Lyocell fibers are characterized by high crystallinity and orientation thereof, a clearer fibril structure, and low adhesiveness between fibrils, and therefore they are easily divided in the fiber axis direction and easily fibrillated.

In the present invention, the regenerated cellulose fiber means a base fiber obtained by spinning the regenerated cellulose raw material or the like, and a fiber obtained by twisting only the base fiber or blending the base fiber with a fiber made of another raw material. In addition, in the present invention, the woven or knitted fabric means woven or knitted fabrics such as woven fabrics, knitted fabrics, or nonwoven fabrics, and molded articles obtained by sewing the fabric.

The woven or knitted fabrics using the reinforced regenerated cellulose fibers obtained by the production method of the present invention is suppressed in shrinkage during washing with water or the like, is excellent in antifibrillation, and has high bursting strength. In addition, fibrillation due to friction during wetting is also suppressed.

In the present specification, in a case where the term "regenerated cellulose fiber or the like" is used, this means both the above-mentioned regenerated cellulose fiber and woven or knitted fabrics containing the regenerated cellulose fiber.

From the viewpoint of obtaining the effect of the present invention, the regenerated cellulose fiber used in the present invention preferably contains a regenerated cellulose component at a ratio of 1 wt% or more with respect to the total fiber weight. In addition, the regenerated cellulose fiber more preferably contains 10 wt% or more, still more preferably 30 wt% or more, further more preferably 50 wt% or more, and even more preferably 70 wt% or more of a regenerated cellulose component. In particular, in fibers or woven or knitted fabrics substantially composed of regenerated cellulose by containing 90 wt% or more of a regenerated cellulose component, the swelling of the regenerated cellulose fibers upon water absorption through washing with water or the like is reduced by the production method according to the present invention, thereby making it possible to effectively reduce shrinkage upon subsequent drying. When the regenerated cellulose is a fiber that is easily fibrillated, such as lyocell, it is possible to suppress fibrillation caused by friction in a wet state in addition to reduction of shrinkage in a dry state.

### (Step A)

Step A is a step of treating regenerated cellulose fibers with caustic. In general, this step is referred to as mercerization or mercerizing treatment, and specifically, this step is a step of immersing woven or knitted fabrics containing regenerated cellulose fibers in an alkali solution of 5 to 30 Baumé, preferably 8 to 30 Baumé, at 10 to 60°C, preferably 10 to 40°C. The fabric immersed in the alkali solution is preferably squeezed by a mangle, washed with hot water after 20 to 120 seconds while being pulled in the warp direction, neutralized by passing through a neutralizing solution containing an aqueous formic acid solution, and then washed with hot water, washed with water, and dried. Examples of the alkali component include sodium hydroxide, lithium hydroxide, and potassium hydroxide.

### (Step B)

Step B is a step of adsorbing fine cellulose fibers to regenerated cellulose fibers. Hereinafter, Step B is also referred to as an "adsorption step".

### (Fine Cellulose Fiber)

The fine cellulose fiber used in the present invention is a fine fiber using cellulose as a raw material, and is a generic term for cellulose nanofibers (hereinafter may be referred to as "CNF") having an average fiber diameter of less than 500 nm and microfibrillated cellulose (hereinafter sometimes referred to as "MFC") having an average fiber diameter of 500 nm or more. The average fiber diameter is a length-weighted average fiber diameter, and can be measured by observing fine cellulose fibers using, for example, a fractionator manufactured by Valmet Corporation or an atomic force microscope (AFM). The average fiber diameter of the fine cellulose fibers is not particularly limited, but is about 1 nm to 60 µm. The fine cellulose fibers can be produced by defibrating cellulose.

### (Cellulose Nanofiber (CNF))

The average fiber diameter of the CNF that can be used in the present invention is preferably 100 nm or less, and more preferably 50 nm or less. The average fiber length is preferably 5 µm or less, and more preferably 3 µm or less. The lower limit of the average fiber length is about 0.1 µm or more. The average fiber length can be measured by analyzing randomly selected 200 fibers using an atomic force microscope (AFM) when the diameter is less than 20 nm, and a field emission scanning electron microscope (FE-SEM) when the diameter is 20 nm or more, and calculating the average. The average aspect ratio of the CNF that can be used in the present invention is preferably 50 or more. The upper limit is not particularly limited, but is usually 1,000 or less. The average aspect ratio can be calculated by the following formula. Aspect ratio = average fiber length/average fiber diameter

### (Microfibrillated Cellulose (MFC))

The average fiber length of the MFC that can be used in the present invention is preferably 5 µm or more, and more preferably 200 µm or more. The upper limit of the average fiber length is preferably 2.0 mm or less, and more preferably about 1.5 mm or less. The average fiber length (length-weighted average fiber length) can be determined by measuring with a fractionator or the like manufactured by Valmet Corporation.

The cellulose raw material is not particularly limited as long as the cellulose raw material contains cellulose, and examples thereof include plants (for example, wood, bamboo, hemp, jute, kenaf, farm waste, cloth, pulp (such as softwood unbleached kraft pulp (NUKP), softwood bleached kraft pulp (NBKP), hardwood unbleached kraft pulp (LUKP), hardwood bleached kraft pulp (LBKP), bleached kraft pulp (BKP), softwood unbleached sulfite pulp (NUSP), softwood bleached sulfite pulp (NBSP), thermomechanical pulp (TMP), recycled pulp, waste paper, etc.), animals (e.g., tunicates), algae, and microorganisms (e.g., acetic acid bacteria (*Acetobacter*)), and microbial products. The cellulose raw material may be any one of them or a combination of two or more thereof, but is preferably a cellulose raw material derived from a plant or a microorganism (for example, cellulose fibers), and more preferably a cellulose raw material derived from a plant (for example, cellulose fibers).

The number average fiber diameter of the cellulose raw material is not particularly limited, but is about 30 to 60 µm in the case of softwood kraft pulp which is a general pulp, and about 10 to 30 µm in the case of hardwood kraft pulp. In the case of other pulps, those subjected to general purification are about 50 µm. For example, when a chip or the like having a size of several cm is purified, it is preferable to perform mechanical treatment with a disintegrator such as a refiner or a beater to adjust the thickness to about 50 µm.

The fine cellulose fiber used in the present invention can be used without particular limitation regardless of the production method when obtaining the fine cellulose fiber from the cellulose raw material as long as the fine cellulose fiber can be dispersed in a dispersion medium such as water. For example, fine cellulose fibers produced by mechanically defibrating a cellulose raw material, fine cellulose fibers produced by subjecting a cellulose raw material to acid hydrolysis or alkali treatment, and fine cellulose fibers produced by defibrating chemically modified cellulose obtained by chemically modifying hydroxyl groups contained in cellulose, can be used. In addition, fine cellulose fibers that are commercially available in the form of a powder or fine cellulose fibers that are commercially available in the form of an aqueous dispersion can be appropriately adjusted to a desired concentration and used.

When fine cellulose fibers obtained by defibrating chemically modified cellulose are used as the fine cellulose fibers, it is preferable to use anionically modified fine cellulose fibers produced by defibrating a cellulose raw material obtained by anionically modifying (anionically modified cellulose) among the chemical modifications from the viewpoint of promoting the progress of defibration. Chemically modified cellulose raw material may be defibrated to obtain chemically modified fine cellulose fibers, which may then be subjected to a regeneration treatment to obtain regenerated fine cellulose fibers, and the resulting regenerated fine cellulose fibers may be used.

### (Anionic Modification)

In the present invention, anionic modification refers to introduction of an anionic group into cellulose, and specifically refers to introduction of an anionic group into a pyranose ring of cellulose by oxidation or substitution reaction. In the present invention, the oxidation reaction refers to a reaction in which a hydroxyl group of a pyranose ring is directly oxidized to a carboxyl group. In the present invention, the substitution reaction refers to a reaction in which an anionic group is introduced into a pyranose ring by a substitution reaction other than the oxidation.

Examples of the anionic modification include oxidation (carboxylation), carboxymethylation, etherification, and esterification such as phosphoric acid esterification, phosphorous acid esterification, xanthate esterification, and sulfuric acid esterification. Among them, oxidation (carboxylation) and carboxymethylation are more preferable, and oxidation (carboxylation) is particularly preferable. Note that the xanthated cellulose (xanthate cellulose) obtained by xanthate esterification can be easily returned to unmodified cellulose by performing a regeneration treatment.

### (Oxidation)

Oxidized (carboxylated) cellulose can be used as the anionically modified cellulose. Oxidized cellulose (also referred to as "carboxylated cellulose") can be obtained by oxidizing (carboxylating) the cellulose raw material by a known method. Although not particularly limited, the amount of carboxyl groups is preferably 0.6 to 3.0 mmol/g, and more preferably 1.0 to 2.0 mmol/g, based on the absolute dry weight of the anionically modified cellulose. As an example of the oxidation (carboxylation) method, a method of oxidizing a cellulose raw material in water using an oxidizing agent in the presence of an N-oxyl compound and a compound selected from the group consisting of a bromide, an iodide, and a mixture thereof can be mentioned. By this oxidation reaction, the primary hydroxyl group at the C6-position of the glucopyranose ring on the cellulose surface is selectively oxidized, and a cellulose fiber having an aldehyde group and a carboxyl group (-COOH) or a carboxylate group (-COO⁻) on the surface can be obtained. The concentration of cellulose during the reaction is not particularly limited, but is preferably 5 wt% or less.

The N-oxyl compound refers to a compound capable of generating a nitroxy radical. As the N-oxyl compound, any compound can be used as long as the N-oxyl compound is a compound that promotes an intended oxidation reaction. Examples thereof include 2,2,6,6-tetramethylpiperidine-1-oxyl radical (TEMPO) and derivatives thereof (for example, 4-hydroxy-TEMPO). The amount of the N-oxyl compound used is not particularly limited as long as the amount is a catalytic amount capable of oxidizing the cellulose raw material. For example, with respect to 1 g of absolutely dry cellulose raw material, 0.01 to 10 mmol is preferable, 0.01 to 1 mmol is more preferable, and 0.01 to 0.5 mmol is still more preferable. In addition, the amount may be 0.1 to 4 mmol/L with respect to the reaction system.

The bromide is a compound containing bromine, and examples thereof include an alkali metal bromide that can be dissociated and ionized in water. The iodide is a compound containing iodine, and examples thereof include alkali metal iodide. The amount of the bromide or iodide to be used can be selected as long as the oxidation reaction can be promoted. The total amount of the bromide and the iodide is, for example, preferably 0.1 to 100 mmol, more preferably 0.1 to 10 mmol, and still more preferably 0.5 to 5 mmol, based on 1 g of absolutely dry cellulose raw material. The modification is modification by an oxidation reaction.

As the oxidizing agent, a known oxidizing agent can be used, and for example, a halogen, a hypohalous acid, a halous acid, a perhalic acid or a salt thereof, a halogen oxide, a peroxide, or the like can be used. Among them, sodium hypochlorite which is inexpensive and has a low environmental load is preferable. The appropriate amount of the oxidizing agent to be used is, for example, preferably 0.5 to 500 mmol, more preferably 0.5 to 50 mmol, and still more preferably 2.5 to 25 mmol, based on 1 g of absolutely dry cellulose raw material. In addition, for example, 1 to 40 mol is preferable with respect to 1 mol of the N-oxyl compound.

In the oxidation step of the cellulose raw material, the reaction can efficiently proceed even under relatively mild conditions. Therefore, the reaction temperature is preferably 4 to 40°C, and may be room temperature of about 15 to 30°C. Since carboxyl groups are generated in cellulose as the reaction proceeds, the pH of the reaction solution decreases. In order to efficiently proceed the oxidation reaction, it is preferable to add an alkali solution such as an aqueous sodium hydroxide solution into the reaction system as needed to maintain the pH of the reaction solution at about 9 to 12, and preferably about 10 to 11. The reaction medium is preferably water because it is easy to handle and side reactions hardly occur. The reaction time in the oxidation reaction can be appropriately set according to the degree of progress of oxidation, and is usually about 0.5 to 6 hours, for example, about 0.5 to 4 hours.

The oxidation reaction may be performed in two stages. For example, when oxidized cellulose obtained by filtration after completion of the first-stage reaction is oxidized again under the same or different reaction conditions, a carboxyl group can be efficiently introduced into the cellulose raw material without being affected by reaction inhibition caused by salts by-produced in the first-stage reaction.

Another example of the oxidation (carboxylation) method includes a of oxidation by ozone treatment, and in the present invention, it is preferable to use TEMPO-oxidized cellulose fine fibers obtained by defibrating oxidized cellulose obtained by a method of oxidation with TEMPO (TEMPO oxidation).

The amount of carboxyl groups contained in the oxidized cellulose fine fibers obtained by modifying the cellulose raw material by oxidation with respect to the absolute dry weight of the cellulose fine fibers is preferably 0.6 mmol/g or more, more preferably 0.8 mmol/g or more, and still more preferably 1.0 mmol/g or more. The upper limit is preferably 2.2 mmol/g or less, more preferably 2.0 mmol/g or less, and still more preferably 1.8 mmol/g or less. Therefore, the amount is preferably 0.6 mmol/g to 2.2 mmol/g, more preferably 0.8 mmol/g to 2.0 mmol/g, and still more preferably 1.0 mmol/g to 1.8 mmol/g.

The amount of carboxyl groups in the oxidized cellulose can be adjusted by controlling the reaction conditions such as the amount of the oxidizing agent added and the reaction time. The amount of carboxyl groups in the oxidized cellulose and the amount of carboxyl groups in the form of fine fibers are usually the same.

In the present invention, in the oxidized cellulose obtained in the above step, the carboxyl group introduced into the cellulose raw material is usually in a salt form, and is an alkali metal salt such as a sodium salt. Before the defibration step, the alkali metal salt of the oxidized cellulose may be substituted with other cation salts such as a phosphonium salt, an imidazolinium salt, an ammonium salt, and a sulfonium salt. The substitution can be performed by a known method.

### (Carboxymethylation)

Preferable anionic groups include carboxyalkyl groups such as carboxymethyl groups. The carboxyalkylated cellulose may be obtained by a known method, or a commercially available product may be used. The degree of substitution with carboxyalkyl group per anhydroglucose unit of cellulose is preferably less than 0.60. Furthermore, when the anionic group is a carboxymethyl group, the degree of substitution with carboxymethyl group is preferably less than 0.60. When the degree of substitution is 0.60 or more, the crystallinity decreases and the ratio of dissolved components increases, and thus the function as fine fibers is lost. The lower limit value of the degree of substitution with carboxymethyl group is preferably 0.01 or more. In consideration of operability, the degree of substitution is particularly preferably 0.02 to 0.50, and more preferably 0.10 to 0.30. Examples of a method for producing such a carboxyalkylated cellulose include a method including the following steps. The modification is modification by a substitution reaction. The carboxymethylated cellulose will be described as an example.
i) A step of performing mercerization treatment by mixing the starting material, solvent, and mercerizing agent, at a reaction temperature of 0 to 70°C, preferably 10 to 60°C, and a reaction time of 15 minutes to 8 hours, preferably 30 minutes to 7 hours; and then
ii) a step of carrying out an etherification reaction by adding a carboxymethylating agent in an amount of 0.05 to 10.0 mol per glucose residue, at a reaction temperature of 30 to 90°C, preferably 40 to 80°C, and a reaction time of 30 minutes to 10 hours, preferably 1 to 4 hours.

As the starting material, the above-mentioned cellulose raw material can be used. As the solvent, 3 to 20 times by weight of water or lower alcohol, specifically, water, methanol, ethanol, N-propyl alcohol, isopropyl alcohol, N-butanol, isobutanol, tertiary butanol, or the like alone, or a mixed medium of two or more kinds thereof can be used. When the lower alcohol is mixed, the mixing ratio is 60 to 95 wt%. As the mercerizing agent, 0.5 to 20 times the molar amount of alkali metal hydroxide per anhydroglucose residue of the starting material, specifically, sodium hydroxide and potassium hydroxide can be used.

As described above, the degree of substitution with carboxymethyl group per glucose unit of cellulose is less than 0.06, and preferably 0.01 or more and less than 0.60. By introducing a carboxymethyl substituent into cellulose, cellulose electrically repels each other. Therefore, cellulose having a carboxymethyl substituent introduced therein can be easily defibrated. When the carboxymethyl substituent per glucose unit is less than 0.02, defibration may be insufficient. The degree of substitution in the carboxylmethylated cellulose and the degree of substitution in the form of fine fibers are usually the same.

In the present invention, in the carboxyalkylated cellulose obtained in the above step, the carboxyalkyl group introduced into the cellulose raw material is usually in a salt form, and is an alkali metal salt such as a sodium salt. Before the defibration step, the alkali metal salt of the carboxyalkylated cellulose may be substituted with other cation salts such as a phosphonium salt, an imidazolinium salt, an ammonium salt, and a sulfonium salt. The substitution can be performed by a known method.

### (Esterification)

As the anionically modified cellulose, esterified cellulose can also be used. Examples of the method include a method in which a powder or an aqueous solution of the phosphoric acid-based compound A is mixed with the cellulose raw material, and a method in which an aqueous solution of the phosphoric acid-based compound A is added to a slurry of the cellulose raw material. Examples of the phosphoric acid-based compound A include phosphoric acid, polyphosphoric acid, phosphorous acid, hypophosphorous acid, phosphonic acid, polyphosphonic acid, and esters thereof. These may be in the form of salts. Among the above, a compound having a phosphate group is preferable because the compound is low in cost and easy to handle, and a phosphate group can be introduced into cellulose of pulp fibers to improve defibration efficiency. Examples of the compound having a phosphate group include phosphoric acid, sodium dihydrogen phosphate, disodium hydrogen phosphate, trisodium phosphate, sodium phosphite, potassium phosphite, sodium hypophosphite, potassium hypophosphite, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. These can be used singly or in combination of two or more kinds thereof to introduce a phosphate group. Among them, phosphoric acid, a sodium salt of phosphoric acid, a potassium salt of phosphoric acid, and an ammonium salt of phosphoric acid are preferable from the viewpoint of high efficiency of phosphate group introduction, easy defibration in the following defibration step, and easy industrial application. In particular, sodium dihydrogen phosphate and disodium hydrogen phosphate are preferable. In addition, it is desirable to use the phosphoric acid-based compound A as an aqueous solution since the reaction can proceed uniformly and the efficiency of phosphate group introduction is increased. The pH of the aqueous solution of the phosphoric acid-based compound A is preferably 7 or less because the efficiency of phosphate group introduction is increased, but the pH is preferably 3 to 7 from the viewpoint of suppressing hydrolysis of pulp fibers.

Examples of the method for producing the phosphate-esterified cellulose include the following methods. Phosphoric acid-based compound A is added to a suspension of a cellulose raw material having a solid content concentration of 0.1 to 10 wt% with stirring to introduce a phosphate group into cellulose. When the amount of the cellulose raw material is 100 parts by weight, the added amount of the phosphoric acid-based compound A is preferably 0.2 to 500 parts by weight and more preferably 1 to 400 parts by weight in terms of the phosphorus element amount. When the proportion of the phosphoric acid-based compound A is the above-mentioned lower limit value or more, the yield of cellulose fine fibers can be further improved. However, when the upper limit value is exceeded, the effect of improving the yield reaches a plateau, which is not preferable from the viewpoint of cost.

In addition to the phosphoric acid-based compound A, a powder or an aqueous solution of the compound B may be mixed. The compound B is not particularly limited, but a nitrogen-containing compound exhibiting basicity is preferable. Here, "basicity" is defined as that the aqueous solution exhibits a peach to red color in the presence of a phenolphthalein indicator, or that the pH of the aqueous solution is greater than 7. The nitrogen-containing compound exhibiting basicity used in the present invention is not particularly limited as long as the effect of the present invention is exhibited, but a compound having an amino group is preferable. Examples thereof include urea, methylamine, ethylamine, trimethylamine, triethylamine, monoethanolamine, diethanolamine, triethanolamine, pyridine, ethylenediamine, and hexamethylenediamine. Among them, urea which is easy to handle at low cost is preferable. The addition amount of the compound B is preferably 2 to 1,000 parts by weight, and more preferably 100 to 700 parts by weight, based on 100 parts by weight of the solid content of the cellulose raw material. The reaction temperature is preferably 0 to 95°C, and more preferably 30 to 90°C. The reaction time is not particularly limited, but is about 1 to 600 minutes, and more preferably 30 to 480 minutes. When the conditions for the esterification reaction are within these ranges, it is possible to prevent cellulose from being excessively esterified and easily dissolved, and the yield of phosphate-esterified cellulose is improved. After dehydrating the obtained phosphate-esterified cellulose suspension, heat treatment is preferably performed at 100 to 170°C from the viewpoint of suppressing hydrolysis of cellulose. Furthermore, it is preferable to perform heat treatment at 130°C or lower, and preferably 110°C or lower while water is contained during the heat treatment, to remove water, and then to perform heat treatment at 100 to 170°C.

The degree of substitution with phosphate group per glucose unit of the cellulose subjected to phosphate esterification is preferably 0.001 or more and less than 0.40. By introducing a phosphate group substituent into cellulose, cellulose electrically repels each other. Therefore, cellulose into which a phosphate group has been introduced can be easily defibrated. When the degree of substitution with phosphate group per glucose unit is less than 0.001, defibration cannot be sufficiently achieved. On the other hand, when the degree of substitution with phosphate group per glucose unit is more than 0.40, the cellulose swells or dissolves, and therefore may not be obtained as fine fibers. In order to efficiently perform defibration, it is preferable that the phosphate-esterified cellulose raw material obtained above is boiled and then subjected to a washing treatment such as washing with cold water. The modification by esterification is modification by a substitution reaction. The degree of substitution in the phosphate-esterified cellulose and the degree of substitution in the form of fine fibers are usually the same.

In the present invention, in the phosphorylated cellulose obtained in the above step, the phosphate group introduced into the cellulose raw material is usually in a salt form, and is an alkali metal salt such as a sodium salt. Before the defibration step, the alkali metal salt of the phosphate-esterified cellulose may be substituted with another cation salt such as a phosphonium salt, an imidazolinium salt, an ammonium salt, or a sulfonium salt. The substitution can be performed by a known method.

In the present invention, it is possible to use xanthated cellulose in which carbon disulfide is added to alkali-treated cellulose to introduce xanthate groups (-OCSS⁻). The xanthated cellulose can be used as regenerated fine cellulose fibers by performing an acid treatment or a heat treatment after performing a defibration treatment to be described later to return xanthate groups to hydroxyl groups.

### (Defibration)

In the present invention, the device for defibrating the cellulose raw material is not particularly limited. It is preferable to apply a strong shearing force to the aqueous dispersion of the cellulose raw material using devices such as high-speed rotation type, colloid mill type, high-pressure type, roll mill type, or ultrasonic type.

It is considered that since the fine cellulose fibers are adsorbed to the regenerated cellulose fibers by the production method according to the present invention, the fine cellulose fibers restrict an increase in volume due to water absorption of the regenerated cellulose fibers to suppress swelling of the regenerated cellulose fibers, and the effect according to the present invention is also produced by adsorbing a trace amount of fine cellulose fibers to the regenerated cellulose fibers. On the other hand, when 0.01 wt% or more of the fine cellulose fibers based on the regenerated cellulose fibers are adsorbed and coated on the surface of the fibers, the interval between the fine cellulose fibers on the regenerated cellulose fiber surface is reduced, and swelling when the regenerated cellulose fibers contain water can be effectively suppressed. In addition, by adsorbing fine cellulose fibers at a ratio of 0.05 wt% or 0.1 wt% or more to cover regenerated cellulose fibers, the swellability of the regenerated cellulose fibers can be remarkably improved. Further, by adsorbing 0.5 wt% or 1.0 wt% or more of fine cellulose fibers to regenerated cellulose fibers, it is possible to substantially cover the entire surface of the regenerated cellulose fibers with the fine cellulose fibers.

In addition, from the viewpoint of improving the swellability of the regenerated cellulose fibers, there is no upper limit on the amount of the fine cellulose fibers to be coated, but there is a tendency that an excessive amount of fine cellulose fibers are adsorbed and coated on the regenerated cellulose fibers, and thus the flexibility of the fibers is impaired, that is, so-called "papermaking" occurs. Therefore, from the viewpoint of maintaining the texture of regenerated cellulose fibers coated with fine cellulose fibers, it is desirable that the amount of fine cellulose fibers to be adsorbed is 5 wt% or less based on the amount of regenerated cellulose fibers.

Considering that the diameter of the base fiber of a generally used regenerated cellulose fiber is about 10 µm, for example, when the regenerated cellulose fiber is coated with CNF of about 0.1 wt% with respect to the regenerated cellulose fiber, the average thickness of the coating layer of the CNF is estimated to be about 2.5 nm. Since the value is usually less than the diameter of CNF, it is considered that the amount of CNF does not cover the entire surface of the regenerated cellulose fiber, but is randomly adsorbed at predetermined intervals. That is, the surface of the reinforced regenerated cellulose fiber produced by the production method according to the present invention does not necessarily have to be entirely covered with fine cellulose fibers such as CNF, and when the regenerated cellulose fiber contains water, the fine cellulose fibers are adsorbed to the regenerated cellulose fiber surface to such an extent that an increase in volume can be suppressed by swelling, whereby the swellability can be improved.

Specifically, from the viewpoint of producing an effect of improving the swellability of regenerated cellulose fibers, it is preferable that the fine cellulose fibers are adsorbed and coated on 10% or more of the surface area of the regenerated cellulose fibers, and from the viewpoint of producing a remarkable effect of improving the swellability, it is preferable that the fine cellulose fibers are adsorbed and coated on preferably 30% or more, more preferably 50% or more of the surface area of the regenerated cellulose fiber surface. In addition, from the viewpoint of producing a remarkable effect of improving swellability, it is also preferable to have a form in which the entire surface of the regenerated cellulose fiber is substantially covered with fine cellulose fibers, and the entire surface of the regenerated cellulose fiber is covered with multiple layers of fine cellulose fibers. The fine cellulose fibers adsorbed to the surface of the regenerated cellulose fibers can be observed by, for example, a scanning electron microscope, and the coverage of the regenerated cellulose fibers and the like can be evaluated.

The adsorption treatment of the fine cellulose fibers to the regenerated cellulose fibers can be performed by performing a fine cellulose fiber adsorption step of immersing the regenerated cellulose fibers and the like in a fine cellulose fiber dispersion in which fine cellulose fibers are dispersed at an appropriate ratio to impregnate and adsorb the fine cellulose fibers and the like into the regenerated cellulose fibers and the like, and then performing a drying step of drying the regenerated cellulose fibers and the like. After the drying step, a set treatment (shape stabilization treatment) is performed at about 150 to 200°C in a state where the regenerated cellulose fibers and the like are maintained in a predetermined shape, whereby an initial shape can be imparted to the regenerated cellulose fibers and the like in which fine cellulose fibers are adsorbed to the surface.

In the treatment for adsorbing the fine cellulose fibers to the regenerated cellulose fibers and the like, for example, the fine cellulose fibers may be adsorbed to single fibers of the regenerated cellulose fibers before spinning or regenerated cellulose fibers that have undergone scouring or bleaching, or the fine cellulose fibers may be adsorbed to woven or knitted fabrics obtained using the regenerated cellulose fibers.

In addition, the treatment method according to the present invention is immersing the regenerated cellulose fibers or the like into a dispersion in which fine cellulose fibers are dispersed, thereby impregnating and adsorbing the fine cellulose fibers onto the regenerated cellulose fibers or the like, and is similar to a dyeing step of a fiber product, and thus can be performed as a part of a step such as dyeing applied to fibrous materials or woven or knitted fabrics. That is, fine cellulose fibers may be adsorbed to the fibrous materials or woven or knitted fabrics before or after dyeing with respect to the fibrous materials or woven or knitted fabrics in the dyeing step as long as the effect according to the present invention is not impaired, or fine cellulose fibers may be mixed with a dye or the like to adsorb the fine cellulose fibers to regenerated cellulose fibers or the like simultaneously with dyeing.

In addition, it is also possible to combine the treatment using fine cellulose fibers according to the present invention with processing using resin, which is performed to impart various properties to the regenerated cellulose fibers or the like. That is, various combinations with processing using a resin are possible, such as performing resin processing on the regenerated cellulose fibers or the like subjected to the fine cellulose fiber treatment according to the present invention, simultaneously performing fine cellulose fiber treatment and resin processing using a treatment liquid obtained by mixing a resin component or the like with a dispersion containing fine cellulose fibers, and performing the fine cellulose fiber treatment according to the present invention on the regenerated cellulose fibers or the like subjected to resin processing.

As means for adsorbing fine cellulose fibers to regenerated cellulose fibers and the like, for example, means classified as so-called dyeing processing in which fibers are immersed in a bath in which a dye is dissolved to absorb the dye into the fibers can be appropriately used, and fine cellulose fibers can be easily adsorbed by using a dispersion of fine cellulose fibers as the bath. For example, according to the dyeing high-pressure processing in which regenerated cellulose fibers and the like are sealed in a container in a state of being immersed in a dispersion containing fine cellulose fibers, and heated to about 120°C and held under high temperature and high pressure, the fine cellulose fibers contained in the dispersion can be efficiently adsorbed to the regenerated cellulose fibers and the like.

In a padding processing step or the like performed as a finishing step after dyeing woven or knitted fabrics containing regenerated cellulose fibers or the like, the woven or knitted fabrics containing regenerated cellulose fibers may be immersed in a treatment liquid containing fine cellulose fibers to adsorb the fine cellulose fibers, and then the fine cellulose fibers may be adsorbed to the regenerated cellulose fibers or the like by a dehydration step using a roll, a drying step, a heat treatment (curing) step or the like.

In addition, by simply immersing regenerated cellulose fibers or the like in the fine cellulose fiber dispersion to adsorb the fine cellulose fibers to the surface of the fibers, and then performing drying or heat treatment, the fine cellulose fibers can be adsorbed to the regenerated cellulose fiber surface, and the shrink-resistance effect can be generated. In addition, it is also possible to adsorb fine cellulose fibers to the regenerated cellulose fiber surface using a spray method, a coating method, a printing method, or the like.

In addition, in particular, by performing the fine cellulose fiber adsorption treatment on woven or knitted fabrics containing regenerated cellulose fibers, it is expected that the fine cellulose fibers are also adsorbed to the interlaced portions of the fibers present in the woven or knitted fabrics, and the deviation occurring between the fibers is suppressed, and the shrink-resistance effect and the like can be more effectively generated.

As the dispersion medium for dispersing the fine cellulose fibers in Step B of the present invention, an appropriate dispersion medium can be used as long as the regenerated cellulose fibers and the like to be treated are not particularly damaged. As a dispersion of fine cellulose fibers, a fine cellulose fiber-containing aqueous solution in which fine cellulose fibers are dispersed in an aqueous solution is commercially available, and it is possible to perform the treatment according to the present invention using a fine cellulose fiber aqueous dispersion obtained by appropriately diluting the fine cellulose fiber-containing aqueous solution or the like. On the other hand, for example, it is preferable to carry out the treatment according to the present invention using a dispersion in which fine cellulose fibers are dispersed in a solvent using an organic solvent having low aggressiveness toward regenerated cellulose fibers or the like, such as those generally used in dry cleaning, since this can prevent swelling of the regenerated cellulose fibers or the like due to water absorption during the treatment.

In the treatment method according to the present invention, it is desirable to determine the amount (concentration) of fine cellulose fibers in the fine cellulose fiber dispersion to be used in consideration of the amount of fine cellulose fibers adsorbed to regenerated cellulose fibers or the like after treatment.

When the fine cellulose fibers are adsorbed to the regenerated cellulose fibers or the like by the above-described dyeing processing, since it is possible to adsorb almost the entire amount of the fine cellulose fibers in the fine cellulose fiber dispersion to the regenerated cellulose fibers or the like, it is possible to use a treatment liquid in which fine cellulose fibers are dispersed in an amount corresponding to the amount of the regenerated cellulose fibers or the like related to the treatment and the target fine cellulose fiber adsorption amount.

When fine cellulose fibers are adsorbed to regenerated cellulose fibers or the like by padding processing or the like in which regenerated cellulose fibers or the like are immersed in a treatment liquid containing fine cellulose fibers under predetermined conditions and then dehydrating or the like is performed, it is desirable to determine the concentration of fine cellulose fibers or the like in the treatment liquid such that a desired amount of fine cellulose fibers is adsorbed to the regenerated cellulose fibers or the like after the treatment.

Exemplarily, by immersing regenerated cellulose fibers and the like in a treatment liquid in which about 0.001% or more of fine cellulose fibers are present or performing padding processing using the treatment liquid, it is possible to cause a decrease in swellability of the regenerated cellulose fibers and the like, a decrease in shrinkage amount after washing with water, and the like.

It is considered that by immersing regenerated cellulose fibers and the like in a dispersion in which the fine cellulose fibers are dispersed, the fine cellulose fibers in contact with the regenerated cellulose fibers and the like or fibrous aggregates thereof are entangled and attached to the surface of the fibers, and the fine cellulose fibers are favorably adsorbed to the regenerated cellulose fiber surface mainly because both have the same molecular structure. It is presumed that the adsorption of the fine cellulose fibers suppresses the subsequent change in form due to swelling or the like of regenerated cellulose fibers, and as a result, shrinkage or the like when washing with water or the like is performed is suppressed.

In the production method according to the present invention, it is also possible to further coat regenerated cellulose fibers or the like to which fine cellulose fibers are adsorbed with an appropriate resin component according to the purpose of imparting a desired texture to the regenerated cellulose fibers or the like, imparting water repellency, or the like. In addition, it is also possible to perform a coating treatment on regenerated cellulose fibers or the like using fine cellulose fibers mixed with a resin component or the like in advance. In particular, by performing coating with a resin component or the like in addition to adsorption of fine cellulose fibers, the tear strength of woven or knitted fabrics containing regenerated cellulose fibers can be improved. As the resin, a crosslinkable cellulose-reactive type resin such as a urea formalin resin, a nylon resin, a polyamide resin, a melamine-formalin resin, ethylene urea, a triazone-type resin, propylene urea, a glyoxal urea resin, a polycarboxylic acid, or an epoxy resin, or a resin effective in improving the stretch recovery of knitted fabrics, such as silicone resin and polyurethane resin, is suitable.

Examples of the resin component mainly aimed at making the regenerated cellulose fiber surface hydrophobic as the resin component to be used include fluorine-based resin and paraffin wax-based resin. In addition, the use of a glyoxal resin generally used for the purpose of preventing wrinkles and shrinkage of cellulose fibers is expected to cause a crosslinking reaction between cellulose molecules contained in fibers and fine cellulose fibers, and is preferable from the viewpoint of further enhancing the effect of the fine cellulose fiber treatment according to the present invention.

As the glyoxal resin, a low-formalin-based resin or a non-formalin-based resin may be used. When a low-formalin-based resin or a non-formalin-based resin is used, the amount of generated formalin is small, which is preferable from the viewpoint of safety.

In addition, when the resin component as described above is used, a catalyst can be added in order to enhance the reactivity between the resin component and cellulose and to rapidly perform the crosslinking reaction. The type of the catalyst may be appropriately selected according to the type of the resin component to be used.

For the fine cellulose fiber dispersion in which regenerated cellulose fibers or the like are immersed for the purpose of adsorbing the fine cellulose fibers, an appropriate chemical agent or the like can be mixed and used according to the purpose of facilitating the adsorption treatment by the fine cellulose fibers or the like. For example, various dispersants can be used for the purpose of satisfactorily dispersing fine cellulose fibers in the fine cellulose fiber dispersion. Examples of the dispersant include polymers functioning as various surfactants, orange oil, and the like.

In addition, in the fine cellulose fiber dispersion, it is effective to adjust the acidity according to the type of fiber to be modified and the like for the purpose of promoting adhesion of fine cellulose fibers to regenerated cellulose fibers. As the agent used for adjusting the acidity, sodium hydroxide, soda ash, or the like can be used for the purpose of alkalization, and oxalic acid, acetic acid, malic acid, or the like can be used for the purpose of acidification.

In addition, for the fine cellulose fiber dispersion, in addition to the above-described components, various additives such as a crosslinking agent such as a blocked isocyanate-based crosslinking agent, a softener for adjusting the texture, a formalin scavenger for reducing the concentration of free formalin, a surfactant as a penetrant, an inorganic compound as an anti-slip agent, and a processing agent for preventing a decrease in the strength of fibers due to resin processing (strength deterioration inhibitor) can be used as necessary.

According to the method for producing reinforced regenerated cellulose fibers of the present invention, the method has a configuration including both the step of treating regenerated cellulose fibers with caustic (Step A) and the step of adsorbing fine cellulose fibers to regenerated cellulose fibers (Step B). Therefore, even in the case of using, as regenerated cellulose fibers, lyocell or the like in which "fibrillation" in which fibers are torn in the axial direction when subjected to friction in a wet state is a problem, woven or knitted fabrics obtained using the reinforced regenerated cellulose fibers obtained by the production method of the present invention is excellent in shrinkage reduction during drying, excellent in antifibrillation, high bursting strength, and excellent in abrasion resistance in a wet state.

### Examples

Hereinafter, the present invention will be described in more detail with reference to Examples, but the present invention is not limited thereto. In addition, when a measurement/calculation method of each numerical value in each Example is not particularly described, the numerical value is measured/calculated by a method described in the specification.

### (Amount of Fibrils after Rubbing Fastness Test (Wet Method))

For the knitted fabrics obtained in Examples 1 to 4 and Comparative Examples 1 to 3, according to a rubbing fastness test (wet method) (JIS L0849), a fabric impregnated with the same amount of moisture as the fabric weight was subjected to a rubbing fastness test (wet method) by reciprocating the fabric by a length of 100 mm 150 times under a load condition of about 2 N (about 200 g) in a Gakushin-type rubbing fastness test. The appearance of the knitted fabric surface after the a rubbing fastness test (wet method) was visually confirmed to evaluate the amount of fibrils. The results are shown in Table 1.

### (Pilling Test)

The knitted fabrics obtained in Examples 1 to 4 and Comparative Examples 1 to 3 were subjected to a pilling test according to JIS L 1076 I method. The results are shown in Table 1 by grade (grades 1 to 5). The larger the numerical value of the grade, the better the antifibrillation. In addition, the observation results of the test piece are also described.

### (Bursting Strength)

For the knitted fabrics obtained in Examples 1 to 4 and Comparative Examples 1 to **3,** the bursting strength (kPa) was determined according to JIS L 1096 A method (Mullen method). The results are shown in Table 1.

### (Wet Abrasion Test)

The woven fabrics obtained in Examples 5 to 8 and Comparative Examples 4 to 10 were subjected to an abrasion test using a test piece in a wet state according to JIS L 1096 E method (Martindale method). The pressing load was 9 kPa. As the end point, the number of times of friction to the end point was measured as the time when a change in appearance occurred and yarn breakage occurred. The results are shown in Table 2. The greater the number of times of friction, the better the abrasion resistance in a wet state.

### (Home Washing Test)

The woven fabrics obtained in Examples 5 to 8 and Comparative Examples 4 to 10 were subjected to a home washing test in accordance with JIS L 1930 C4N. For each of the cases where the number of repetitions was 5 and 10, the length of the measurement section before and after the test was measured, and the dimensional change rate was calculated. The drying method was Method A (hanging drying). The results are shown in Table 2. When the numerical value of the dimensional change rate is negative, shrinkage is indicated.

### (Production Example 1)

### (Production of Oxidized Cellulose Nanofiber)

5.00 g (absolutely dry) of bleached unbeaten kraft pulp derived from softwood (whiteness 85%) was added to 500 mL of an aqueous solution in which 39 mg (0.05 mmol based on 1 g of absolutely dry cellulose) of TEMPO (Sigma Aldrich) and 514 mg (1.0 mmol based on 1 g of absolutely dry cellulose) of sodium bromide were dissolved, and the mixture was stirred until the pulp was uniformly dispersed. A sodium hypochlorite aqueous solution was added to the reaction system such that the amount of sodium hypochlorite was 6.0 mmol/g, and an oxidation reaction was started. The pH in the system decreased during the reaction, but a 3M aqueous sodium hydroxide solution was sequentially added to adjust the pH to 10. The reaction was terminated when sodium hypochlorite was consumed and the pH in the system did not change. The mixture after the reaction was acidified using hydrochloric acid, then filtered through a glass filter to separate the pulp, and the pulp was sufficiently washed with water to obtain oxidized pulp (carboxylated cellulose). The pulp yield at this time was 90%, the time required for the oxidation reaction was 90 minutes, and the amount of carboxyl groups was 1.6 mmol/g. This was adjusted to 1.0% (w/v) with water, and a 3M sodium hydroxide solution was added to adjust the pH to 7. Treatment was performed three times with an ultra-high pressure homogenizer (20°C, 150 MPa) to obtain a dispersion of TEMPO-oxidized cellulose nanofibers (CNF). The average fiber diameter was 3 nm, and the average fiber length was 550 nm. The transparency was 88.9% (solid content: 1.0%). In addition, this dispersion of oxidized CNF had a B-type viscosity of 3,260 mPa·s at 60 rpm when the solid content concentration was 1 wt%.

### (Production Example 2)

### (Production of Carboxymethylated Cellulose Nanofiber)

To a 5 L biaxial kneader having a rotation speed adjusted to 100 rpm, 1,089 parts of isopropanol (IPA) and a solution of 31 parts of sodium hydroxide in 121 parts of water were added, and 200 parts by dry mass of hardwood pulp (LBKP manufactured by Nippon Paper Industries Co., Ltd.) when dried at 100°C for 60 minutes was added. The mixture was stirred and mixed at 30°C for 60 minutes to prepare mercerized cellulose. While further stirring, 117 parts of sodium monochloroacetate was added, and the mixture was stirred at 30°C for 30 minutes, then heated to 70°C over 30 minutes, and subjected to carboxymethylation reaction at 70°C for 60 minutes. The ratio of water in the reaction medium during the mercerization reaction and the carboxymethylation reaction is 10 mass%. After completion of the reaction, the reaction mixture was neutralized, washed with 65% hydrous methanol, dehydrated, dried, and pulverized to obtain a sodium salt of carboxymethylated cellulose having a degree of substitution with carboxymethyl group of 0.27 and a degree of crystallinity of type I cellulose of 64%. The obtained sodium salt of carboxymethylated cellulose was dispersed in water to prepare a 1% (w/v) aqueous dispersion. This was treated 3 times with a high pressure homogenizer at 150 MPa to obtain a dispersion of carboxymethylated cellulose nanofibers. The obtained carboxymethylated cellulose nanofiber had an average fiber diameter of 3.2 nm and an average fiber length of 120 nm. The transparency was 81% (solid content: 1.0%). In addition, in this CNF dispersion, the B-type viscosity at 60 rpm was 4,500 mPa·s when the solid content concentration was 1 wt%.

### (Production Example 3)

### (Production of Phosphate Esterified Cellulose Nanofiber)

As a raw material pulp, a Canadian standard freeness (CSF) measured according to JIS P 8121 after disintegrating a bleached unbeaten kraft pulp derived from softwood manufactured by Nippon Paper Industries Co., Ltd. was 700 mL) was used. A mixed aqueous solution of ammonium dihydrogen phosphate and urea was added to 100 parts by mass (absolutely dry mass) of the raw material pulp to adjust 45 parts by mass of ammonium dihydrogen phosphate, 120 parts by mass of urea, and 150 parts by mass of water, thereby obtaining a chemical solution impregnated pulp. Next, the obtained chemical solution impregnated pulp was heated in a hot air dryer at 165°C for 200 seconds to introduce a phosphate group into the cellulose in the pulp, thereby obtaining a phosphorylated pulp. Next, the obtained phosphorylated pulp was subjected to a washing treatment.

The washing treatment was performed by repeating an operation of stirring a pulp dispersion obtained by pouring 10 L of ion-exchanged water into 100 g (absolutely dry mass) of phosphorylated pulp such that the pulp was uniformly dispersed, and then filtering and dehydrating the pulp dispersion. When the electrical conductivity of the filtrate reached 100 µS/cm or less, the washing end point was determined. Next, the phosphorylated pulp after washing was subjected to an alkali treatment as follows. First, the washed phosphorylated pulp was diluted with 10 L of ion-exchanged water, and then a 1 N aqueous sodium hydroxide solution was added little by little while stirring to obtain a phosphorylated pulp slurry having a pH of 12 or more and 13 or less. Next, the phosphorylated pulp slurry was dehydrated to obtain an alkali-treated phosphorylated pulp. Next, the phosphorylated pulp after the alkali treatment was subjected to the washing treatment. Ion exchanged water was added to the obtained phosphorylated pulp to prepare a slurry having a solid content concentration of 2 mass%, and the slurry was treated three times with an ultra-high pressure homogenizer (20°C, 150 MPa) to obtain a phosphate esterified cellulose nanofiber dispersion. The obtained cellulose nanofibers had an average fiber diameter of 4 nm and an average fiber length of 620 nm. The transparency was 86% (solid content: 1.0%). In addition, in this CNF dispersion, the B-type viscosity at 60 rpm was 3,100 mPa·s when the solid content concentration was 1 wt%.

### (Production Example 4)

### (Production of Regenerated Cellulose Nanofibers)

An unbeaten bleached kraft pulp derived from softwood (whiteness: 85%, manufactured by Nippon Paper Industries Co., Ltd.) was immersed in an 18% aqueous caustic soda solution, and compressed and pulverized to prepare alkali cellulose. After the alkali cellulose was aged, carbon disulfide was reacted to prepare cellulose xanthate. This cellulose xanthate was dispersed in water to have a solid content of 1%, and then treated three times with an ultra-high pressure homogenizer (20°C, 150 MPa) to obtain a cellulose xanthate cellulose nanofiber dispersion. An aqueous sulfuric acid solution was added to the cellulose xanthate cellulose nanofiber, the mixture was stirred for a predetermined time, and then sodium hydroxide was added to prepare regenerated cellulose nanofibers. Further, the regenerated cellulose nanofibers were subjected to dehydration and washing treatment to perform purification. After purification, dispersion was performed again to prepare a regenerated cellulose nanofiber aqueous dispersion (1% concentration). The obtained cellulose nanofibers had an average fiber diameter of 6.2 nm and an average fiber length of 520 nm. The transparency was 82% (solid content: 1.0%). In addition, in this CNF dispersion, the B-type viscosity at 60 rpm was 2,900 mPa·s when the solid content concentration was 1 wt%.

### (Example 1)

A knitted fabric composed of lyocell (100% lyocell, knit structure: single jersey, basis weight: 170 g/m²) was heat-set at 170°C for 1 minute using a 5-chamber heat-setting machine, then immersed in a 5 Baumé aqueous sodium hydroxide solution at 20°C. After 20 seconds, it was squeezed with a mangle, washed with hot water, passed through a neutralizing solution for neutralization treatment, followed by hot water washing, water washing, and drying, thereby performing caustic treatment (Step A).

Next, the caustic-treated knitted fabric was dyed using a reactive dye under conditions of 60°C with a jet dyeing machine, followed by an adsorption treatment of fine cellulose fibers (Step B). Specifically, to the aqueous dispersion of TEMPO-oxidized cellulose nanofiber (TEMPO-oxidized CNF) produced in Production Example 1 (CNF solid content concentration: 1.0 wt%, hereinafter may be referred to as the "stock solution"), a dispersant (Alcosol GL, manufactured by Meisei Chemical Works, Ltd.) in an amount equivalent to 2 wt% relative to the stock solution was added. Thereafter, the mixture was diluted with industrial water such that the weight ratio of the CNF solid content became 0.02%, thereby preparing the treatment liquid.

The knitted fabric subjected to the caustic treatment and dyeing was immersed in the treatment liquid using a padding treatment apparatus, and then squeezed with a roll such that the wet pickup was 100 wt%, and then dried, and then set (form stabilization treatment) for about 60 seconds with hot air at 170°C, and subjected to a rubbing fastness test, a pilling test, and a bursting strength test.

### (Example 2)

In Example 1, except that the oxidized cellulose nanofiber was replaced with carboxymethylated cellulose nanofiber (CM-CNF) produced in Production Example 2, the knitted fabric was produced in the same manner as in Example 1 and subjected to each test.

### (Example 3)

In Example 1, except that the oxidized cellulose nanofiber was replaced with phosphorylated cellulose nanofiber produced in Production Example 3, the knitted fabric was produced in the same manner as in Example 1 and subjected to each test.

### (Example 4)

In Example 1, except that the oxidized cellulose nanofiber was replaced with regenerated cellulose nanofiber produced in Production Example 4, the knitted fabric was produced in the same manner as in Example 1 and subjected to each test.

### (Comparative Example 1)

The knitted fabric made of lyocell used in Example 1 was subjected to each test without performing Step A and Step B.

### (Comparative Example 2)

Except that Step B was not performed, a knitted fabric was obtained by carrying out caustic treatment (Step A) and dyeing in the same manner as in Example 1, and was subjected to each test.

### (Comparative Example 3)

Except that Step A was not performed, a knitted fabric was obtained by carrying out dyeing and adsorption of fine cellulose fibers (Step B) in the same manner as in Example 1, and was subjected to each test.

**[Table 1]**

| | Example 1 | Example 2 | Example 3 | Example 4 | Comparative Example 1 | Comparative Example 2 | Comparative Example 3 |
|---|---|---|---|---|---|---|---|
| Type of regenerated cellulose fibers | Lyocell | Lyocell | Lyocell | Lyocell | Lyocell | Lyocell | Lyocell |
| CNF type | TEMPO-oxidized CNF | CM-CNF | Phosphate-esterified CNF | Regenerated CNF | - | - | TEMPO-oxidized CNF |
| Step | Step A → dyeing → Step B | Step A → dyeing → Step B | Step A → dyeing → Step B | Step A → dyeing → Step B | Dyeing | Step A → dyeing | Dyeing → Step B |
| Step A (Caustic treatment step) | Present | Present | Present | Present | Absent | Present | Absent |
| Step B (Adsorption step) | Present | Present | Present | Present | Absent | Absent | Present |
| Amount of fibrils after rubbing fastness test (wet method)(visually) | Few | Few | Few | Few | Many | Many | Moderate |
| Pilling test | Grade 4.5 No fuzzing or pilling | Grade 4.5 No fuzzing or pilling | Grade 4.5 No fuzzing or pilling | Grade 4.5 No fuzzing or pilling | Grade 4.5 Fuzzing observed | Grade 4.5 Fuzzing observed | Grade 4.5 Fuzzing observed |
| Bursting strength (kPa) | 244 | 239 | 238 | 235 | 180 | 195 | 218 |

As can be seen from Table 1, the knitted fabric of Examples 1 to 4 using the fibers produced by the method for producing reinforced regenerated cellulose fibers of the present invention including Step A: a step of treating regenerated cellulose fibers with caustic, and Step B: a step of adsorbing fine cellulose fibers to regenerated cellulose fibers had suppressed fibrillation after the a rubbing fastness test (wet method), and had excellent antifibrillation and high bursting strength.

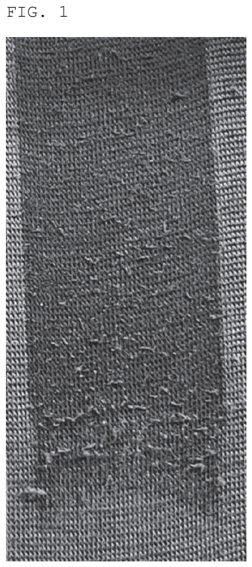

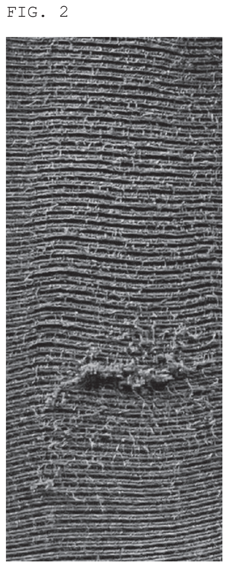

For the knitted fabrics of Example 1 and Comparative Example 1, the fabric surface after the a rubbing fastness test (wet method) was observed. A photograph of the observation result of the sample after the a rubbing fastness test of the knitted fabric obtained in Example 1 is shown in Fig. 1. Similarly for Comparative Example 1, a photograph of the observation results is shown in Fig. 2.

From Figs. 1 and 2, it was found that in the case of the knitted fabric of Example 1, fibrillation was suppressed even after the a rubbing fastness test, whereas in the case of the knitted fabric of Comparative Example 1, fibrillation progressed after the a rubbing fastness test, resulting in increased fuzziness.

### (Example 5)

A woven fabric composed of lyocell (100% lyocell, weave density: 106 warp yarns/2.54 cm, 96 weft yarns/2.54 cm) was heat-set at 170°C for 1 minute using a 5-chamber heat-setting machine, then immersed in a 5 Baumé aqueous sodium hydroxide solution at 20°C. After 20 seconds, it was squeezed with a mangle, washed with hot water, passed through a neutralizing solution for neutralization treatment, followed by hot water washing, water washing, and drying, thereby performing caustic treatment (Step A).

Next, the caustic-treated woven fabric was dyed using a reactive dye under conditions of 60°C with a jet dyeing machine, followed by an adsorption treatment of fine cellulose fibers (Step B). Specifically, a treatment liquid was prepared by mixing the following components in industrial water: 10% of a diluted dispersion (CNF solid content concentration: 0.1 wt%, hereinafter may be referred to as the "mother liquid") obtained by dispersing and diluting the aqueous dispersion (1% stock solution) of TEMPO-oxidized CNF produced in Production Example 1; 5% of glyoxal resin 1 (urea/formaldehyde-based resin, non-volatile content: 38-42%); 1% of glyoxal resin 2 (melamine/formaldehyde-based resin, non-volatile content: 75-79%); 0.5% of amine salt-type catalyst; 1% of formalin scavenger; 1% of softener (reactive silicone type); 0.01% of surfactant as a penetrant; and 0.01% of acetic acid. The weight ratio of the CNF solid content in this treatment liquid was 0.01%.

Using a padding treatment apparatus, the woven fabric subjected to caustic treatment and dyeing was immersed in the treatment liquid for 5 to 6 seconds, then squeezed with a roll such that the wet pickup was 100 wt%, and then dried, and then set (form stabilization treatment) with hot air at 170°C for about 60 seconds, and the obtained woven fabric was subjected to an abrasion test and a home washing test.

### (Example 6)

Except that the concentration of glyoxal resin 1 in the treatment liquid used in Step B was changed to 1%, the concentration of glyoxal resin 2 was changed to 0.5%, and a blocked isocyanate-based aqueous crosslinking agent (solid content: 55%) was additionally used at 1%, a woven fabric was obtained by performing caustic treatment (Step A), dyeing, and adsorption of fine cellulose fibers (Step B) in the same manner as in Example 5, and was subjected to each test.

### (Example 7)

Except that the treatment liquid used in Step B was prepared by mixing the following components in industrial water: 20% of a mother liquid (CNF solid content concentration: 0.1 wt%) obtained by dispersing and diluting the aqueous dispersion (stock solution) of TEMPO-oxidized CNF produced in Production Example 1; 8% of glyoxal resin 1 (non-formalin-based resin, solid content: approximately 42%); 3% of a catalyst for non-formalin-based resin (composite metal salt type); 3% of a polyethylene-based emulsion as a strength deterioration inhibitor; 2% of a modified inorganic compound as an anti-slip agent; 1.2% of a softener (amino-modified silicone); 0.01% of a surfactant as a penetrant; and 0.01% of acetic acid, a woven fabric was obtained by performing caustic treatment (Step A), dyeing, and adsorption of fine cellulose fibers (Step B) in the same manner as in Example 5, and was subjected to each test. The weight ratio of the CNF solid content in the treatment liquid used in Step B was 0.02%.

### (Example 8)

Except that the treatment liquid used in Step B was further containing 1% of a blocked isocyanate-based aqueous crosslinking agent (solid content: 55%), a woven fabric was obtained by performing caustic treatment (Step A), dyeing, and adsorption of fine cellulose fibers (Step B) in the same manner as in Example 7, and was subjected to each test.

### (Comparative Example 4)

A woven fabric composed of lyocell (100% lyocell, weave density: 106 warp yarns/2.54 cm, 96 weft yarns/2.54 cm) was dyed using a reactive dye under conditions of 60°C with a jet dyeing machine. Thereafter, the wet pickup was squeezed with a roll to be 100 wt%. Next, after drying, the fabric was subjected to a setting (shape stabilization treatment) with hot air at 170°C for approximately 60 seconds to obtain a treated woven fabric, which was then subjected to an abrasion test and a home laundering test.

### (Comparative Example 5)

Except that, prior to squeezing with a roll, a step was added in which the dyed woven fabric was immersed for 5 to 6 seconds in a treatment liquid prepared by mixing 1% of a softener (reactive silicone type) in industrial water, a woven fabric was obtained in the same manner as in Comparative Example 4 and was subjected to each test.

### (Comparative Examples 6 to 9)

Except that Step A was not performed, a woven fabric was obtained by carrying out dyeing and adsorption of fine cellulose fibers (Step B) in the same manner as in Examples 5 to 8, and was subjected to each test.

### (Comparative Example 10)

Except that Step B was not performed, caustic treatment (Step A) and dyeing were carried out in the same manner as in Example 5, and the fabric was squeezed with a roll such that the wet pick-up became 100 wt%. Thereafter, the fabric was dried and then subjected to a setting (shape stabilization treatment) with hot air at 170°C for approximately 60 seconds, and the obtained woven fabric was subjected to each test.

**[Table 2]**

| | | | Example 5 | Example 6 | Example 7 | Example 8 | Comp. Example 4 | Comp. Example 5 | Comp. Example 6 | Comp. Example 7 | Comp. Example 8 | Comp. Example 9 | Comp. Example 10 |
|---|---|---|---|---|---|---|---|---|---|---|---|---|---|
| Type of regenerated cellulose fibers | | | Lyocell | Lyocell | Lyocell | Lyocell | Lyocell | Lyocell | Lyocell | Lyocell | Lyocell | Lyocell | Lyocell |
| Presence or absence of steps | Step A (Caustic treatment step) | | Present | Present | Present | Present | Absent | Absent | Absent | Absent | Absent | Absent | Present |
| | Dyeing | | Present | Present | Present | Present | Present | Present | Present | Present | Present | Present | Present |
| | Step B (Adsorption step) | | Present | Present | Present | Present | Absent | Absent | Present | Present | Present | Present | Absent |
| | CNF (0.1% mother liquid) | Amount (% ) | 10 | 10 | 20 | 20 | - | - | 10 | 10 | 20 | 20 | - |
| | Gyoxal resin 1 | Type | Urea /formaldehyd e-based resin | Urea /formaldehyd e-based resin | Non-formalin-based resin | Non-formalin-based resin | - | - | Urea /formaldehyd e-based resin | Urea /formaldehyd e-based resin | Non-formalin-based resin | Non-formalin-based resin | - |
| | | Amount (% ) | 5 | 1 | 8 | 8 | - | - | 5 | 1 | 8 | 8 | - |
| | Gyoxal resin 2 | Type | Melam ine /form aldehyd e-based resin | Melam ine /form aldehyd e-based resin | - | - | - | - | Melamine /formaldehyd e-based resin | Melamine /formaldehyd e-based resin | - | - | - |
| Treatment liquid of step B | | Amount (% ) | 1 | 0.5 | - | - | - | - | 1 | 0.5 | - | - | - |
| | Catalyst | Amount (% ) | 0.5 | 0.5 | 3 | 3 | - | - | 0.5 | 0.5 | 3 | 3 | - |
| | Scavenger | Amount (% ) | 1 | 1 | 0 | 0 | - | - | 1 | 1 | 0 | 0 | - |
| | Crosslinking agent | Amount (% ) | 0 | 1 | 0 | 1 | - | - | 0 | 1 | 0 | 1 | - |
| | Strength deterioration inhibitor | Amount (% ) | 0 | 0 | 3 | 3 | - | - | 0 | 0 | 3 | 3 | - |
| | Anti-slip agent | Amount (% ) | 0 | 0 | 2 | 2 | - | - | 0 | 0 | 2 | 2 | - |
| | Softener | Amount (% ) | 1 | 1 | 1.2 | 1.2 | - | - | 1 | 1 | 1.2 | 1.2 | - |
| | Penetrant | Amount (% ) | 0.01 | 0.01 | 0.01 | 0.01 | - | - | 0.01 | 0.01 | 0.01 | 0.01 | - |
| | Acetic acid | Amount (% ) | 0.01 | 0.01 | 0.01 | 0.01 | - | - | 0.01 | 0.01 | 0.01 | 0.01 | - |
| Reference | | | - | - | - | - | - | Softener was used after dyeing | - | - | - | - | - |
| Evaluation result | Number of times of friction (number) | | 1800 | 1600 | 1300 | 1400 | 1200 | 1000 | 1100 | 1200 | 1100 | 1100 | 1200 |
| | Dimensional change rate (repeated 5 times) | Length (% ) | -1 | -1 | -2 | -1 | -5 | -4 | -3 | -2 | -4 | -2 | -2 |
| | | Width (% ) | -5 | -4 | -4 | -3 | -7 | -7 | -6 | -5 | -6 | -4 | -4 |
| | Dimensional change rate (repeated 10 times) | Length (% ) | -1 | -1 | -2 | -1 | -6 | -5 | -4 | -3 | -4 | -3 | -2 |
| | | Width (% ) | -5 | -4 | -3 | -3 | -6 | -8 | -6 | -5 | -7 | -5 | -3 |

As can be seen from Table 2, the woven fabric of Examples 5 to 8 using the fibers produced by the method for producing reinforced regenerated cellulose fibers of the present invention including Step A: a step of treating regenerated cellulose fibers with caustic, and Step B: a step of adsorbing fine cellulose fibers to regenerated cellulose fibers was excellent in abrasion resistance in a wet state, and had a small dimensional change due to washing with water.

## Claims

1. A method for producing reinforced regenerated cellulose fibers, comprising steps below:
Step A: a step of treating regenerated cellulose fibers with caustic; and
Step B: a step of adsorbing fine cellulose fibers to regenerated cellulose fibers.

2. The method for producing reinforced regenerated cellulose fibers according to claim 1, wherein the Step B is performed after the Step A.

3. The method for producing reinforced regenerated cellulose fibers according to claim 1 or 2, wherein the fine cellulose fibers are oxidized fine cellulose fibers.

4. The method for producing reinforced regenerated cellulose fibers according to claim 1 or 2, wherein the regenerated cellulose fibers are lyocell.
